# EUROPEAN PATENT APPLICATION

(11) **EP 4 574 772 A1**
(43) Date of publication of application: **25.06.2025**
(21) Application number: 23217538.0
(22) Date of filing: 18.12.2023
(51) Int. Cl.: C02F 1/461, C02F 1/467, C02F 1/72, C02F 101/30, D06F 35/00

(54) **METHOD OF MULTISTAGE ELECTRODE-BASED WATER TREATMENT**

(71) Applicant: Miele & Cie. KG, 33332 Gütersloh (DE)
(72) Inventor: Ebke, Daniel, Dr., 33613 Bielefeld (DE); Strothoff, Werner, 48336 Sassenberg (DE); Oßwald, Sebastian, Winston-Salem NC, 27106 (US); Parda, Andrew, Providence, RI 02903 (US); Rosenblum, Yael, Cambridge, MA 02140 (US); Sun, Eric, Cambridge, MA 02141 (US)

(57) **Abstract**

The present disclosure provides a method for a multistage electrode-based water treatment in which a water bearing electrical device is tested for performance. Then water is supplied to the device and a current is supplied to the first electrochemical cell as well as a solution, possibly a detergent. Then the electrolyte solution generated from the first electrochemical cell is fed to a bleaching facility and the wash process is completed. The bleaching facility is then drained, and a current is applied to a second electrochemical cell to treat the wastewater generated during the wash process.

## Description

### FIELD OF THE DISCLOSURE

The present disclosure is generally related to a multistage electrode-based water treatment.

### BACKGROUND

Most clothes washers and dishwashers use detergents to clean the desired objects (clothing or cookware). Various formulations of detergents have been introduced that provide excellent cleaning in either type of machine. For example, clothes washers often use a surfactant such as a linear alkylbenzene sulfonates, usually along with water softeners, bleaches, enzymes, etc. Dishwashers also use surfactants, water softeners, bleaches, enzymes, and other ingredients. Detergents have become substantially more environmentally sensitive Over the years in terms of wastewater processing concerns of the various ingredients. However, use of detergents generally requires use of rinse cycles, which in turn requires that additional water and energy be used by the machine. Further, additional wastewater is generated during such a rinse cycle, requiring additional treatment in a septic or sewage system. In order to avoid or reduce use of detergents, detergent less ionic washing has been proposed in clothing and dishwashers. For example, a number of such ionic washers disclose systems wherein alkaline water is produced for detergent less washing in various embodiments of electrolysis devices. However, currently household appliances as well as professional used appliances for washing or cleaning textiles do not utilize a multi-stage water treatment device in which the water is first treated to assist in cleaning the textiles and the second stage is used for treating the wastewater.

Also, such systems do not provide a check of the overall system or device prior to using the appliance. In general, a washing machine (usually, a drum washing machine) is an apparatus, which includes a tub to contain water (wash water or rinse water), a cylindrical drum rotatably installed to receive laundry, and a motor generating driving force to rotate the drum and achieves washing of the laundry through tumbling of the laundry along the inner wall of the drum when the cylindrical drum is rotated. Such a washing machine performs washing of laundry through a series of cycles, i.e., a washing cycle to remove contaminants from the laundry using water dissolving a detergent (concretely, wash water), a rinsing cycle to remove foams and residues of the detergent from the laundry using water not dissolving the detergent (concretely, rinse water), and a spin-drying cycle to dehydrate the laundry at a high speed. When the laundry is washed through this series of cycles, contaminants or lime scales are deposited on the rear surface of the drum as time goes by. The contaminants or the lime scales cause propagation of microorganisms (bacteria) throughout the tub, and further generate surface deposits (flock) causing decay, thereby bringing about generation of mold. The mold is a source of odor generation due to metabolic products thereof or is attached to laundry while subsequent washing of laundry is performed, thus contaminating the laundry.

Lastly, most appliances with an ability to treat the water supply for a washing process do not provide a solution for the wastewater generated during the wash process. Household cleaning processes like laundry, dishes etc., require large amounts of water. The wastewater generated in-home from washing and rinsing laundry is generally referred to as greywater. It would be a great benefit if it were possible to reduce the amount of greywater that is produced by households. One possible way of achieving this is to treat the greywater so it can be reused, notably in cleaning processes. In order to reuse household grey water for cleaning processes it is essential to remove all the particulate matter and the detergents. A commercially available front loading washing machine typically uses approximately 50 liters of water for a normal full wash cycle. A top loading washing machine typically requires about 200 liters of water. Depending on the number of rinse steps, 25% or more of this volume of water is required for the main wash, while 65% or more is used for the consecutive rinse cycles. This is an enormous amount of grey water for businesses and consumers, who may wish to reduce their environmental impact, to produce on a regular basis. There is therefore a need to reduce the environmental burden of water-bearing appliance wastewater. Thus, there is a need in the prior art to provide a method for a multistage electrode-based water treatment.

### DESCRIPTIONS OF THE DRAWINGS

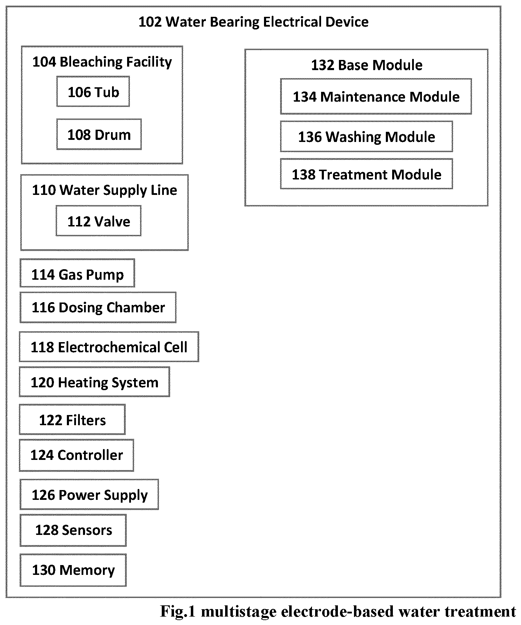

FIG. 1: Illustrates a multistage electrode-based water treatment, according to an embodiment.
FIG. 2: Illustrates a Base Module, according to an embodiment.
FIG. 3: Illustrates a Maintenance Module, according to an embodiment.
FIG. 4: Illustrates a Washing Module, according to an embodiment.
FIG. 5: Illustrates a Treatment Module, according to an embodiment.

### DETAILED DESCRIPTION

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

This is a method for a multistage electrode-based water treatment. This method comprises of a water bearing electrical device 102 in which cleaning is to be achieved using a bleaching agent, and a water-bearing electrical device which carries out cleaning using a bleaching agent, i.e., hydrogen peroxide produced from electrolysis, such as by a washing machine, a dishwasher, a type of household or professional disinfector appliance, etc. The water bearing electrical device 102 may include a bleaching facility 104 and an electrochemical cell 118 with a cathode arranged in a cathode chamber and an anode arranged in an anode chamber, which are spatially separated, having the following steps during a cleaning program, which includes a washing process and has several rinsing processes. First, providing a solution in the electrochemical cell which comprises water and an electrolyte. Second, applying a current to the electrochemical cell and simultaneously introducing an oxygen-containing gas to produce a bleach in a catholyte. Third, feeding the catholyte from the electrochemical cell into the bleaching facility 104 before and/or during the washing process. In the first step, a water and electrolyte containing solution is provided in the electrochemical cell 118, wherein the solution can be arranged in the electrochemical cell 118 or passed through it. The electrolyte can comprise or consist of an inorganic salt and/or a builder. The inorganic salt is preferably sodium sulfate and/or sodium hydrogen carbonate. In a preferred embodiment, the builder has one or more components selected from the group consisting of citric acid, lactic acid, phosphonate, polycarboxylic acid, aminocarboxylic acid, polyacrylic acid and/or their salts. Alternatively, the builder preferably consists of one or more of these components. In the second step, if the oxygen-containing gas is supplied to the electrochemical cell 118, which preferably has a gas diffusion electrode in the cathode space, and current is applied to it, an electrolysis starts in which a bleaching agent, such as hydrogen peroxide, is formed. Due to the spatial separation of the cathode and anode compartments, the anolyte and the catholyte are produced separately from one another. The pH of the catholyte is shifted into the alkaline pH range, while a pH value of the anolyte is shifted into the acidic pH range. If the anode compartment and the cathode compartment were not separated, the catholyte and the anolyte would at least partially neutralize each other, which has proven to be disadvantageous. A pH of the catholyte is preferably in the range from 9 to 14, more preferably 10 to 12. In the third step, only the catholyte is fed to the bleaching facility 104. In other words, the catholyte is fed to the bleaching facility 104 without an anolyte produced in the second step. The catholyte is anolyte-free. During the washing process, items to be cleaned or the bleaching facility 104 itself is washed with the bleaching agent produced, such as hydrogen peroxide produced from electrolysis, and, if necessary, other ingredients of the solution in order to clean it. During the one or more rinsing processes, the items to be cleaned or the bleaching facility 104 itself is rinsed with water in order to rinse the solution out of the bleaching facility 104 and possibly the items to be cleaned. In some embodiments, the method furthermore has a step of feeding the anolyte produced in the second step from the electrochemical cell 118 into the bleaching facility 104 after a washing process has been carried out. The anolyte produced in the second step is preferably fed to the bleaching facility 104 before and/or during the execution of a rinsing process from the electrochemical cell 118. By inserting the acidic anolyte solution into one of the wash cycles, any calcium deposits that may have formed in the water-conducting electrical device and/or on the items to be cleaned can be dissolved again. Hygiene is increased, since both alkaline and acidic pH values are run through in the water-bearing electrical device during a washing and rinsing cycle. The anolyte is therefore used sensibly. In some embodiments, the bleaching agent may refer to a chemical compound, may be hydrogen peroxide produced by an electrochemical process, such as by an electrochemical cell 118, may be an anolyte or catholyte resulting from or generated as an intermediary product during an electrochemical process. In some embodiments, the bleaching agent may remove dyes, contaminants, pathogens, etc. from textiles, fabrics, materials, surfaces, fluids, etc. For instance, a water bearing electrical device 102 such as a water bearing electrical device 102 of EP3865614A1. Further, embodiments may include a bleaching facility 104 which may contain a tub 106 and a drum 108 contained within the tub 106. The bleaching facility 104 may receive the catholyte produced from the first electrochemical cell 118 before and/or during a washing process via a supply line to clean the items stored in the drum 108. In some embodiments, after the washing process the anolyte produced by the second electrochemical cell 118 may be fed to the bleaching facility 104 before and/or during the execution of a rinsing process from the second electrochemical cell 118. By inserting the acidic anolyte solution into one of the wash cycles, any calcium deposits that may have formed in the water-conducting electrical device and/or on the items to be cleaned can be dissolved again. Hygiene is increased, since both alkaline and acidic pH values are run through in the water-bearing electrical device during a washing and rinsing cycle. For instance, a bleaching facility 104 such as a bleaching facility 104 of EP3865614A1. Further, embodiments may include a tub 106 that seals in the water of the water bearing electrical device 102 and may vibrate, shake, rotate, etc. by a motor and a counterweight in order to clean, wash, rinse, etc. the items contained in the drum 108 which may be contained within the tub 106. In some embodiments, the bleaching facility 104 may contain a tub 106 and drum 108, such as a washing machine. In some embodiments, the tub 106 may include a drain, drain line, drain pump, and drain valve to dispose of the wastewater created during the wash process. In some embodiments, the tub 106 may be drained or emptied of the wastewater by activating a drain valve located in a drain line connected to a drain entrance at the bottom of the tub 106. In some embodiments, the bleaching facility may only contain a tub 106 or water sealed drum 108, such as a dishwasher. In some embodiments, the bleaching facility may be used for a household or professional use disinfector appliance that may or may not include a tub 106 or drum 108. For instance, a tub 106 such as a tub 106 of US6841058B2. Further, embodiments may include a drum 108 that is contained within the tub 106 and is where the items to be cleaned are placed. The drum 108 may include sides that perforated with holes to allow water to enter and exit upon spinning the drum 108. For instance, a drum 108 such as a drum 108 of US6841058B2. Further, embodiments may include a water supply line 110 that connects to the electrochemical cell 118 to supply the water for the washing process. The water supply line 110 may include a valve 112 that may be opened or closed based on the control signals received from the controller 130 to feed the water to the electrochemical cell 118 for the wash cycle. The water supply line 110 may be connected to a water source, such as a water line for a household, building, or dwelling. In some embodiments, the water supply line 110 may be replaced with a water tank located within the water bearing electrical device 102 to supply the water to the electrochemical cell 118. In some embodiments, the water supply line 110 may include a pump, a pressurized source, etc. to move the water through the water supply line 110. For instance, a water supply line 110 such as a feed supply of US7950254B2. Further, embodiments may include a valve 112 for the water supply line 110 that may be opened or closed based on the control signals received from the controller 130 to feed the water to the electrochemical cell 118 for the wash cycle. In some embodiments, the valve 112 may be used to control the supply of water from a water tank or another source of water for the washing process or cycle. Further, embodiments may include a gas pump 114 which connects to the cathode through a gas supply line to supply air or oxygen to the cathode chamber. The gas pump 114 supplies air or oxygen as an oxygen-containing gas via a gas supply line to the cathode chamber and a current is applied to the electrochemical cell 118. Applying a current to the electrochemical cell 118 at the same time introducing an oxygen-containing gas, such as air, into the cathode space by activating the gas pump 114 generates hydrogen peroxide in the aqueous electrolyte-containing solution. For instance, a gas pump 114 such as an oxygen supply line of JP2005146344A. Further, embodiments may include a dosing chamber 116 which is designed to meter an electrolyte, for example an electrolyte-containing solution, such as a salt-containing solution, and possibly a detergent into the electrochemical cell 118 by means of a metering pump. When the electrochemical cell 118 is supplied with water in a predetermined quantity, the electrolyte, such as a solution containing salt, and possibly a detergent is metered from the dosing chamber 116 into the electrochemical cell 118 via the metering pump. In some embodiments, the dosing chamber 116 may provide the electrolyte to the electrochemical cell 118 through a pipe, hose, tubing, etc. In some embodiments, the dosing chamber 116 may be replaced with a dosing pump, metering pump, etc. to provide the electrolyte to the electrochemical cell 118. In some embodiments, the electrolytes may include sodium, chloride, potassium, magnesium, calcium, etc. For instance, a dosing chamber 116 such as a dosing chamber 116 of EP2798995B1. Further, embodiments may include an electrochemical cell 118 with a cathode compartment and an anode compartment, that provides an aqueous electrolyte-containing solution in the electrochemical cell 118 and applies a current to the electrochemical cell 118 and simultaneously introduces an oxygen-containing gas to generate hydrogen peroxide in the aqueous electrolyte-containing solution. Then the electroylated solution is fed from the electrochemical cell 118 into the bleaching device and a bleach activator is fed into the electrochemical cell 118 and/or the bleaching facility 104. The electrochemical cell 118 is designed to produce a hydrogen peroxide-containing bleaching agent using the electrolyte, water, air and electric current. If the electrochemical cell 118 has the electrolyte, water and air and an electric current flow, water is oxidized at an anode of the electrochemical cell, with protons being formed. At the same time, the oxygen contained in the air is reduced at a cathode of the electrochemical cell 118, in particular a gas diffusion electrode. The protons are used up, for example, the protons combine with the electrons to form hydrogen, and hydrogen peroxide is produced. The cathode is preferably designed as an oxygen diffusion electrode. The anode can be a dimensionally stable anode, a mixed oxide electrode or a boron-doped diamond electrode. The reaction product of electrolysis is a hydrogen peroxide solution. An anode compartment in which the anode is located and a cathode compartment in which the cathode is located are preferred, for example, through a membrane such as a cation exchange membrane spatially separated, so that an alkaline hydrogen peroxide solution is preferably produced. The electrode, such as diamond electrode, of the reactor is preferably boron- or nitrogen-doped. One or more of the electrodes may be a boron-doped diamond electrode, such as diamond electrodes which have a possibly doped diamond layer applied to a carrier material. The diamond electrode may function as an anode or a cathode in the process, the reactor having a counter electrode of a suitable material, such as steel, which may also form the reactor itself. It is also possible that the reactor has two diamond electrodes which function as anode and cathode. The reactor therefore constitutes an electrolyzer. It may also be designed as an electrolyzer having a membrane which spatially separates the anode and the cathode, so that products and/or intermediates formed on electrolysis on a diffusion from the cathode to the anode space and/or prevented vice versa. For instance, an electrochemical cell 118 such as an electrochemical cell 118 of EP3865614A1, US6132572A, US9994463B2, JP2005146344A. Further, embodiments may include a heating system 120 which may be used to heat the water supply to a desired temperature for a washing process. The water bearing electrical appliance may include a built in heater to heat the water supply. In some embodiments, the water supply line 110 may include a hot water supply line to provide heated water to the cleaning process. In some embodiments, the heating system 120 may include a container with an inlet channel and an outlet channel and in the container two spaced plates which act as electrodes and each have an electrical connection for connection to an electrical voltage source for generating a current flow I through the water between the plates, with at least one plate being movably mounted to the distance between the plates and thereby to change the volume of water provided between the plates. The plates may have a large distance from each other. A movable plate is guided in the container by means of a lever mechanism. A drive means serves to drive the lever mechanism to move the plate in order to change the parallel distance of the plate to the fixed plate. A control device is designed to switch the appropriate AC voltage to the plates and to activate the drive means in order to set the distance between the plates. The conductance of the liquid located in the container can be detected with the detection means and fed to the control device. Based on the detected conductance and the specified requirements for the water heating, the control device can activate the drive means in order to set the distance in such a way that an electrical current flow is set, which leads to the desired heating of the water. The heating system 120 is designed as a continuous-flow heater, it can also be designed as a boiler. The current is an alternating current of the same frequency due to the alternating voltage applied to the plates. Further, embodiments may include a plurality of filters 122 to capture unwanted elements from entering or exiting the water bearing electrical device 102, such as dirt, lint, harmful contaminants, etc. The filters 122 may be located within the water supply line 110 and/or at the drainage component of the water bearing electrical device 102. For instance, a filter 122 such as a filter 122 of US9994463B2. Further, embodiments may include a controller 124 which is a computing device comprised of a processor for performing computations and communicates with a memory 130 for storing data. The controller 124 is in communication with a plurality of components of the water bearing electrical device 102 and may further be allowed to control the functions of the water bearing electrical device 102. The controller 124 may be a commercially available central processing unit (CPU) or graphical processing unit (GPU) or may be a proprietary, purpose-build design. More than one controller 124 may operate in tandem and may be of different types, such as a CPU and a GPU. A GPU is not restricted to only processing graphics or image data and may be used for other computations. Further, embodiments may include a power supply 126 which may be a hardware component that supplies power to the water bearing electrical device 102. It receives power from an electrical outlet and converts the current from AC, alternating current, to DC, direct current, or may supply the alternating current, and may regulate the voltage to an adequate amount. The power supply 126 may be wired, wireless, such as through a battery. The power supply 126 may supply a current to the water bearing electrical device 102, electrochemical cell 118, gas pump 114, heating system 120, sensors 128, etc. collectively or individually. Further, embodiments may include a sensor 128 which is a measurement tool for monitoring a characteristic or metric associated with the water bearing electrical device 102. A sensor 128 may be discrete or part of an array or assembly. A sensor 128 may be a pH sensor which may be used to accurately measure acidity and alkalinity in water and other liquid substances. A sensor 128 may be a sensor to detect contamination within the water, either entering or exiting the water bearing electrical device 102, such as chemical sensors, electrochemical piezoelectric sensors, functional DNA biosensors, TOC sensors, etc. One or more of the sensors 128 may include temperature sensors, rotor position sensors, water level sensors, dirt sensors, photoelectric sensors, pressure sensors, vibration sensors, water flow sensors, proximity sensors, humidity sensors, any combination thereof, etc. The sensors 128 may be integrated into the operation of the water bearing electrical device 102 or may monitor the status of the device. In some embodiments, the data collected by the sensors 128 may be in real-time or may need to be analyzed further to produce findings. For instance, a sensor 128 such as a sensor 128 of US9702074B2, US11147650B2, and a gas sensor of EP2397062B1. Further, embodiments may include a memory 130 such as the electronic circuitry within a computing device that temporarily stores data for usage by the controller 124. The memory 130 may additionally comprise persistent data storage for storing data used by the controller 124. The memory 130 may be integrated into a controller 124 or may be a discrete component. The memory 130 may be integrated into a circuit, such as soldered on component of a single board computer (SBC) or may a removable component such as a discrete dynamic random-access memory (DRAM) stick, secure digital (SD) card, flash drive, solid state drive (SSD), magnetic hard disk drive (SSD), etc. In some embodiments, memory 130 may be part of a controller 124. Further, embodiments may include a base module 132 which begins with the user selecting the washing cycle. The base module 132 initiates the maintenance module 134. The base module 132 sends the washing cycle to the washing module 136. The base module 132 initiates the washing module 136. The base module 132 receives the completion signal from the washing module 136. The base module 132 initiates the treatment module 138. Further, embodiments may include a maintenance module 134 which begins by being initiated by the base module 132. The maintenance module 134 sends a status signal to the power supply 126. The maintenance module 134 sends a status signal to the sensors 128. The maintenance module 134 sends a status signal to the electrochemical cell 118. The maintenance module 134 receives the status signals from the power supply 126, the sensors 128, and the electrochemical cell 118. The maintenance module 134 determines if all of the status signals were received. If it is determined that all of the status signals were not received the maintenance module 134 notifies the user. The maintenance module 134 ends if it is determined that all of the status signals were not received after the user has been notified. If it is determined that all of the status signals were received the maintenance module 134 returns to the base module 132. Further, embodiments may include a washing module 136 which begins by being initiated by the base module 132. The washing module 136 receives the washing cycle from the base module 132. The washing module 136 activates the water supply. The washing module 136 provides the solution from the dosing chamber 116. The washing module 136 activates the first electrochemical cell 118. The washing module 136 feeds the solution from the electrochemical cell 118 to the bleaching facility 104. The washing module 136 determines if the tub 106 is filled to the predetermined level. If it is determined that the tub 106 is not filled to the predetermined level the washing module 136 continues activating the first electrochemical cell 118 and the washing module 136 returns to determining if the tub 106 is filled. If it is determined that the tub 106 is filled to the predetermined level the washing module 136 deactivates the electrochemical cell 118. Then the washing module 136 determines if the washing cycle is complete. If it is determined that the washing cycle is not complete the washing module 136 continues the washing cycle and returns to determining if the washing cycle is complete. If it is determined that the washing cycle is complete the washing module 136 sends a completion signal to the base module 132. The washing module 136 returns to the base module 132. Further, embodiments may include a treatment module 138 which begins by being initiated by the base module 132. The treatment module 138 activates the tub 106 drain valve. The treatment module 138 provides the solution from the second dosing chamber 116. The treatment module 138 activates the second electrochemical cell 118. The treatment module 138 determines if the tub 106 is emptied. If it is determined that the tub 106 is not emptied the treatment module 138 continues draining the tub 106. If it is determined that the tub 106 is emptied the treatment module 138 deactivates the electrochemical cell 118. The treatment module returns to the base module 132.

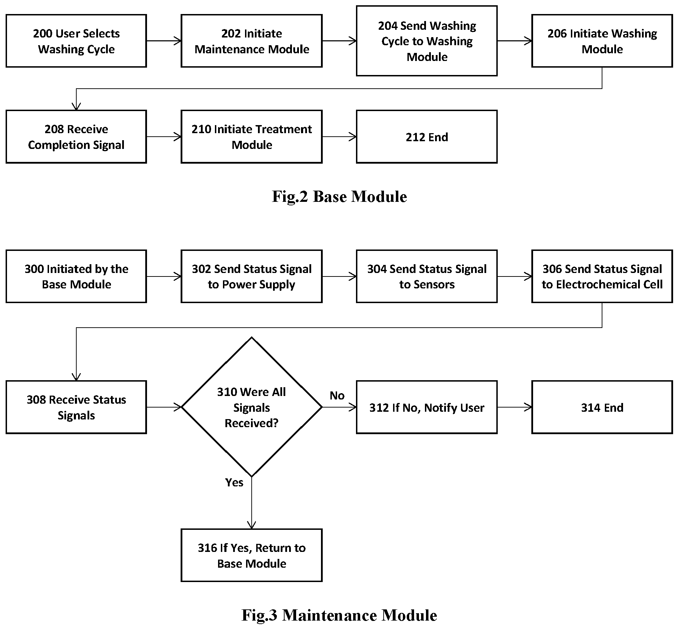

Functioning of the base module 132 will now be explained with reference to FIG. 2. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the base module 132. The process begins with the user selecting, at step 200, the washing cycle. For example, the user may select the type of wash process the water bearing electrical device 102 will perform, such as a normal wash, heavy duty, delicate, etc. Each wash process may have different types of motions performed by the drum 108, such as a different number of spins, rotations, vibrations within the bleaching facility 104. Each wash process may be performed for different periods of time to effectively wash the textiles located in the bleaching facility 104 depending on the wash cycle selected. In some embodiments, the predetermined time for the wash cycle selected may be sent to the washing module 134. The base module 132 initiates, at step 202, the maintenance module 134. For example, the maintenance module 134 may begin by being initiated by the base module 132. The maintenance module 134 sends a status signal to the power supply 126. The maintenance module 134 sends a status signal to the sensors 128. The maintenance module 134 sends a status signal to the electrochemical cell 118. The maintenance module 134 receives the status signals from the power supply 126, the sensors 128, and the electrochemical cell 118. The maintenance module 134 determines if all of the status signals were received. If it is determined that all of the status signals were not received the maintenance module 134 notifies the user. The maintenance module 134 ends if it is determined that all of the status signals were not received after the user has been notified. If it is determined that all of the status signals were received the maintenance module 134 returns to the base module 132. The base module 132 sends, at step 204, the washing cycle to the washing module 136. For example, the type of wash cycle selected by the user, including the length in which the washing process will be performed may be sent to the washing module 136. The base module 132 initiates, at step 206, the washing module 136. For example, the washing module 136 begins by being initiated by the base module 132. The washing module 136 receives the washing cycle from the base module 132. The washing module 136 activates the water supply. The washing module 136 provides the solution from the dosing chamber 116. The washing module 136 activates the first electrochemical cell 118. The washing module 136 feeds the solution from the electrochemical cell 118 to the bleaching facility 104. The washing module 136 determines if the tub 106 is filled to the predetermined level. If it is determined that the tub 106 is not filled to the predetermined level the washing module 136 continues activating the first electrochemical cell 118 and the washing module 136 returns to determining if the tub 106 is filled. If it is determined that the tub 106 is filled to the predetermined level the washing module 136 deactivates the electrochemical cell 118. Then the washing module 136 determines if the washing cycle is complete. If it is determined that the washing cycle is not complete the washing module 136 continues the washing cycle and returns to determining if the washing cycle is complete. If it is determined that the washing cycle is complete the washing module 136 sends a completion signal to the base module 132. The washing module 136 returns to the base module 132. The base module 132 receives, at step 208, the completion signal from the washing module 136. For example, the base module 132 receives a signal from the washing module 136 that the wash process is complete. In some embodiments, the wash process may be completed when a timer that is set to the length of the wash cycle selected is completed. The base module 132 initiates, at step 210, the treatment module 138. For example, the treatment module 138 begins by being initiated by the base module 132. The treatment module 138 activates the tub 106 drain valve. The treatment module 138 provides the solution from the second dosing chamber 116. The treatment module 138 activates the second electrochemical cell 118. The treatment module 138 determines if the tub 106 is emptied. If it is determined that the tub 106 is not emptied the treatment module 138 continues draining the tub 106. If it is determined that the tub 106 is emptied the treatment module 138 deactivates the electrochemical cell 118. The treatment module returns to the base module 132. The base module 132 ends, at step 212, once the washing cycle is complete and the wastewater has been treated.

Functioning of the maintenance module 134 will now be explained with reference to FIG. 2. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the maintenance module 134. The process begins with the maintenance module 134 being initiated, at step 300, by the base module 132. The maintenance module 134 sends, at step 302, a status signal to the power supply 126. For example, the maintenance module 134 may send a signal to the controller 124 which may send a signal to the power supply 126 to confirm that the power supply 126 is activated. In some embodiments, the controller 124 may send a signal to a plurality of components of the water bearing electrical device 102 to confirm that the various components are receiving power. The maintenance module 134 sends, at step 302, a status signal to the sensors 128. For example, the maintenance module 134 may send a signal to the controller 124 which may send a signal to the plurality of sensors 128 to confirm that the sensors 128 are activated. In some embodiments, the maintenance module 134 may collect data from the sensors 128 to ensure that the various sensor 128 readings are within a predetermined range to confirm that components of the water bearing electrical device 102 are working properly. The maintenance module 134 sends, at step 302, a status signal to the electrochemical cell 118. For example, the maintenance module 134 may send a signal to the controller 124 which may send a signal to the electrochemical cell 118 to confirm that the electrochemical cell 118 is online. In some embodiments, the maintenance module 134 may collect sensor 128 data from the previous operation of the electrochemical cell 118 to confirm it is functioning correctly. The maintenance module 134 receives, at step 308, the status signals from the power supply 126, the sensors 128, and the electrochemical cell 118. For example, the controller 124 receive the status signals from the power supply 126, the sensors 128, and the electrochemical cell 118 and the controller 124 may send back to the maintenance module 134 that the power supply 126 is active, the sensors 128 are online, and that the electrochemical cell 118 is functioning properly. The maintenance module 134 determines, at step 310, if all of the status signals were received. For example, the maintenance module 134 may determine if all of the status signals were received to confirm that the water bearing electrical device 102 may function when activated by the user. In some embodiments, there may be a database containing the statuses of all the components of the device and their current statuses which may be used for diagnostic purposes. If it is determined that all of the status signals were not received the maintenance module 134 notifies, at step 312, the user. For example, the user may be notified if a component of the device is not functioning properly, such as a power light being turned off to inform the user of the power supply 126 not being active, a beep or noise indicating if the sensors 128 or electrochemical cell 118 are not functioning properly. In some embodiments, the notification may a visual or audio indicator, a notification on a display on the device, receiving a message through a mobile device, smart device, electronic device, etc. The maintenance module 134 ends, at step 314, if it is determined that all of the status signals were not received after the user has been notified. For example, if the maintenance module 134 determines all the status signals were not received the maintenance module 134 ends the process to ensure that the device is not activated when it cannot properly function. If it is determined that all of the status signals were received the maintenance module 134 returns, at step 316, to the base module 132. For example, the maintenance module 134 may send a signal to the base module 132 that the device is functioning properly, the process may continue, and the maintenance module 134 returns to the base module 132 to begin the washing cycle through the washing module 136.

Functioning of the washing module 136 will now be explained with reference to FIG. 3. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the washing module 136. The process begins with the washing module 136 being initiated, at step 400, by the base module 132. The washing module 136 receives, at step 402, the washing cycle from the base module 132. For example, the type of wash cycle selected by the user, including the length in which the washing process will be performed may be sent by the base module 132. In some embodiments, the base module 132 may store the washing cycle selected by the user in a database and send the database to the washing module 136, which may include the washing cycle selected, the length of time the washing cycle takes, the amount of water required for the washing cycle, how long the electrochemical cell 118 is activated for, the number of rotations, spins, vibrations, etc. the drum will perform, etc. The washing module 136 activates, at step 404, the water supply. For example, the washing module 136 activates the water supply by sending a signal to the controller 124 to open the valve 112 in the water supply line 110 to send the water to the electrochemical cell 118. In some embodiments, the valve 112 may be opened for a predetermined amount of time depending on the washing cycle the user selected. In some embodiments, the amount of water provided for the washing cycle may be dependent on sensor 128 data collected from a water pressure sensor to detect the water pressure for a period of time and once a predetermined amount of time has elapsed at a certain water pressure the valve 112 is closed. The washing module 136 provides, at step 406, the solution from the dosing chamber 116. For example, when the electrochemical cell 118 is supplied with water in a predetermined quantity, the solution containing salt and possibly a detergent is metered from the dosing chamber 116 into the electrochemical cell 118 via the metering pump. The washing module 136 activates, at step 408, the first electrochemical cell 118. For example, the washing module 136 may send a signal to the controller 124 to activate the electrochemical cell 118 by sending a specific voltage to the electrochemical cell 118, such as 1.2 volts. The electrochemical cell 118 may produce hydrogen peroxide as the water supply passes through the electrochemical cell 118, as well as being supplied the solution from the dosing chamber 116. In some embodiments, the electrochemical cell 118 may utilize a sensor 128 to measure the correct voltage to produce hydrogen peroxide, for example, by using a hydrogen peroxide sensor 128. The washing module 136 feeds, at step 410, the solution from the electrochemical cell 118 to the bleaching facility 104. For example, the washing module 136 feeds the hydrogen peroxide solution into the bleaching facility 104 in order to wash the textiles contained in the bleaching facility 104. The washing module 136 determines, at step 412, if the tub 106 is filled to the predetermined level. For example, the washing module 136 may collect data from a sensor 128 located within the tub 106 to determine if the water level within the tub 106 has reached the appropriate amount to perform the washing cycle selected by the user. In some embodiments, the water level may be determined by using a sensor 128 located within the line between the electrochemical cell 118 and the bleaching facility 104 to determine how long the tub 106 has been filling up with the hydrogen peroxide solution from the electrochemical cell 118. In some embodiments, the washing module 136 may be continuously polling the sensor 128 located within the tub 106 to determine if the water level has reached the predetermined level. If it is determined that the tub 106 is not filled to the predetermined level the washing module 136 continues activating, at step 414, the first electrochemical cell 118 and the washing module 136 returns to determining if the tub 106 is filled. For example, the washing module 136 is continuously polling the sensor 128 located within the tub 106 to determine if the water level has reached the predetermined level. If it is determined that the tub 106 is filled to the predetermined level the washing module 136 deactivates, at step 416, the electrochemical cell 118. For example, the washing module 136 may deactivate the electrochemical cell 118 by sending a signal to the controller 124 to stop supplying the voltage to the electrochemical cell 118, as well as sending a signal to the controller 124 to close the valve 112 located within the water supply line 110. Then the washing module 136 determines, at step 418, if the washing cycle is complete. For example, the washing module 136 may use a predetermined amount of time for each washing cycle selected by the user as well as a predetermined number of spins, rotations, vibrations, etc. for each washing cycle and once the predetermined amount of time or spins, rotations, vibrations, etc. have been performed the washing cycle is complete. In some embodiments, the washing process may include a washing cycle performed by the first electrochemical cell 118 and a separate rinsing cycle that may be performed by the second electrochemical cell 118. For example, once the washing cycle is complete the rinsing cycle is immediately initiated and the water from the washing cycle is treated by the second electrochemical cell 118 to be used in the rinsing cycle to further treat the textiles located in the drum 108. For example, the washing cycle may use the first electrochemical cell 118 to produce hydrogen peroxide to treat the textiles and the rinsing cycle may use the second electrochemical cell 118 to produce hydroxide ions to treat the water used in the washing cycle and use the treated water in a rinsing or refreshing cycle for the textiles located in the drum 108. The two electrochemical cells 118 may have different types of electrodes, such as nickel, stainless steel, platinum, graphite, diamond, etc. The different electrodes may allow the electrochemical cells 118 to better produce hydrogen peroxide, hydrogen ions, hydroxide ions, etc. For example, the first electrochemical cell 118 may have nickel electrodes to better produce hydrogen peroxide for the washing cycle and the second electrochemical cell 118 may have diamond electrodes to better produce hydroxide ions. The first and second electrochemical cells 118 may be used depending on the electrodes that are contained within the electrochemical cell 118 for each different type of wash process selected by the user. The washing module 136 may utilize a database that contains the various wash processes that a user may select and the corresponding components that may be used and data files containing the instructions to be sent to the controller 124 to activate each of the components and how long to activate each of the components. For example, if the user selected a regular wash, with hot water and the textile load only contained white colored textiles, the database would have a data file containing instructions to activate the first electrochemical cell 118, by supply 1.2 volts to the nickel electrodes of the first electrochemical cell 118, to produce a hydrogen peroxide water solution that would be contained in 50% of the water used in the washing cycle and the textiles will be rotated for 20 minutes, etc. In some embodiments, the database used by the washing module 136 may include a plurality of electrochemical cells 118 that contain different electrodes, different voltages to apply to each of the electrochemical cells 118, how long to apply the voltages to the electrochemical cells, the product generated by the electrochemical cell 118 such as hydrogen peroxide, hydrogen ions, hydroxide ions, etc. In some embodiments, the database used by the washing module 136 may contain the different shapes of the electrodes, the distance between each electrode, the rate of production for the product generated by different times and different voltages, etc. If it is determined that the washing cycle is not complete the washing module 136 continues, at step 420, the washing cycle and returns to determining if the washing cycle is complete. If it is determined that the washing cycle is complete the washing module 136 sends, at step 422, a completion signal to the base module 132. For example, the washing module 136 sends a signal to the base module 132 to inform the base module 132 that the washing cycle selected by the user is complete. The washing module 136 returns, at step 424, to the base module 132.

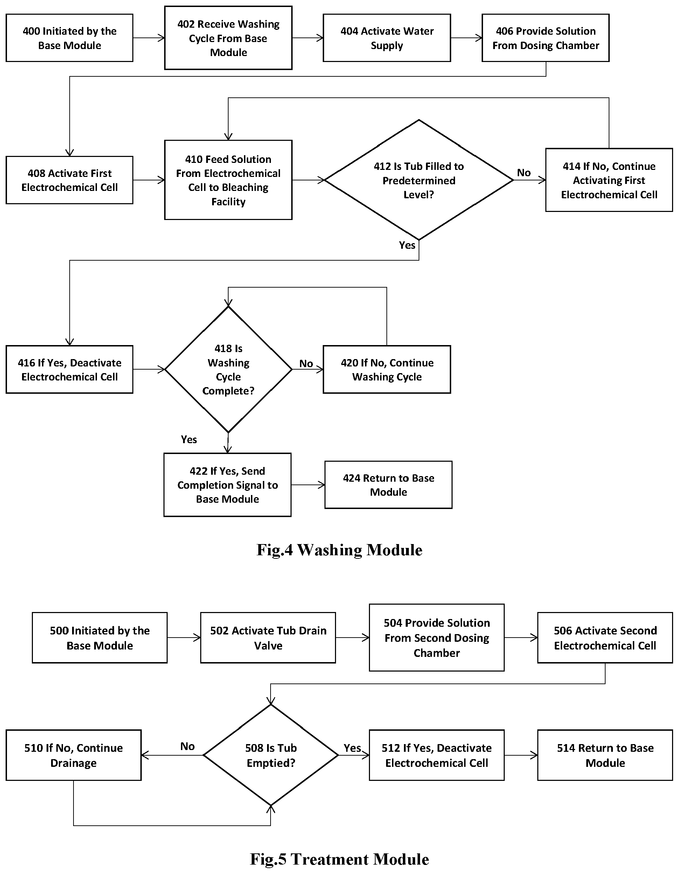

Functioning of the treatment module 138 will now be explained with reference to FIG. 4. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the treatment module 138. The process begins with the treatment module 138 being initiated, at step 500, by the base module 132. The treatment module 138 activates, at step 502, the tub 106 drain valve. For example, the treatment module 138 activates the tub 106 drain valve to drain or empty the wastewater located in a drain line connected to a drain entrance at the bottom of the tub 106. In some embodiments, there may be filters 122 located between the tub 106 drain and the second electrochemical cell 118 to remove a concentration of solids, oils, etc. such as bar screens, coarse filters, oil coalescers, etc. The treatment module 138 provides, at step 504, the solution from the second dosing chamber 116. For example, the solution may be a salt or salt solution to increase electrical conductivity of the wastewater being treated. In some embodiments, the salt solution may be minimal to prevent generation of excessive amounts of chlorine based oxidants. The treatment module 138 activates, at step 506, the second electrochemical cell 118. For example, the second electrochemical cell 118 may be specifically designed to treat wastewater. The second electrochemical cell 118 may be designed to perform electrocoagulation which is a technique used for wastewater treatment by removing contaminants that are more difficult to be removed by filtration or chemical treatment systems. The second electrochemical cell 118 may be made up of an electrolytic cell with one anode and one cathode. When connected to an external power source, the anode material will electrochemically corrode due to oxidation, while the cathode will be subjected to passivation. It consists of pairs of conductive metal plates in parallel, which act as monopolar electrodes. It furthermore requires a direct current power source, a resistance box to regulate the current density and a multimeter to read the current values. The conductive metal plates are commonly known as sacrificial electrodes. The sacrificial anode lowers the dissolution potential of the anode and minimizes the passivation of the cathode. The sacrificial anodes and cathodes can be of the same or of different materials. The arrangement of monopolar electrodes with cells in series is electrically similar to a single cell with many electrodes and interconnections. In series cell arrangement, a higher potential difference is required for a given current to flow because the cells connected in series have higher resistance. The same current would, however, flow through all the electrodes. In contrast, in parallel or bipolar arrangement the electric current is divided between all the electrodes in relation to the resistance of the individual cells, and each face on the electrode has a different polarity. During electrolysis, the positive side undergoes anodic reactions, while on the negative side, cathodic reactions are encountered. Consumable metal plates, such as iron or aluminum, are usually used as sacrificial electrodes to continuously produce ions in the water. The released ions neutralize the charges of the particles and thereby initiate coagulation. The released ions remove undesirable contaminants either by chemical reaction and precipitation, or by causing the colloidal materials to coalesce, which can then be removed by flotation. In addition, as water containing colloidal particulates, oils, or other contaminants move through the applied electric field, there may be ionization, electrolysis, hydrolysis, and free-radical formation which can alter the physical and chemical properties of water and contaminants. As a result, the reactive and excited state causes contaminants to be released from the water and destroyed or made less soluble. In some embodiments, the first electrochemical cell 118 may be used to treat the wastewater generated by the washing process. For example, the first electrochemical cell 118 may be a multi-stage electrochemical cell 118 in which the cell is activated at different stages of wash cycle to perform different functions, such as during the washing process the first electrochemical cell 118 may be activated to produce hydrogen peroxide to clean the textiles located in the drum 108, and then during the wastewater treatment process the first electrochemical cell 118 may be activated to use the hydrogen ions or hydroxide ions generated to treat the wastewater depending on the pH balance of the wastewater. For example, the wastewater may be drained into a reserve tank that includes a plurality of sensors 128, such as a pH sensor 128, and the treatment module 138 may receive the pH sensor 128 data from the reserve tank and compare the data to a database that contains the pH adjustment to treat the wastewater. For example, by adjusting the pH heavy metals and other toxic metals can be removed from the water. If the pH is raised, by raising the amount of negative hydroxide ions, the positively charged metal ions will form bonds with the negatively charged hydroxide ions and creates a dense, insoluble, metal particle that can be filtered out manually using the filters 122, such as by a filter press. The pH of water can be used to kill off bacteria in wastewater in addition to the treatment mentioned above. Most organic matter and bacteria that is familiar and contact daily with are best suited to a neutral or slightly basic environment. At an acidic pH the excess hydrogen ions begin to form bonds with and break down the cell, slowing their growth or killing them outright. After a wastewater treatment cycle the pH must be raised back to neutral by use of additional chemicals or it will continue to damage any living cell it contacts. The treatment module 138 may raise the pH level an acidic pH level to treat the wastewater, lower the pH level of a basic pH level to kill of bacteria, contaminants, etc. and then raise the pH level back up, etc. to treat the wastewater using the hydrogen ions and hydroxide ions generated by the first electrochemical cell 118. The treatment module 138 determines, at step 508, if the tub 106 is emptied. For example, there may be sensor 128 located at the bottom of the tub 106 to detect the water level of the tub 106 and if the collected data informs the treatment module 138 that the water level is below the sensor 128, for example reading no more water, then the tub 106 is emptied. If it is determined that the tub 106 is not emptied the treatment module 138 continues, at step 510, draining the tub 106. For example, the treatment module 138 is continuously polling the sensor 128 located at the bottom of the tub 106 to determine if the tub 106 has been emptied. If it is determined that the tub 106 is emptied the treatment module 138 deactivates, at step 512, the electrochemical cell 118. For example, once the tub 106 is emptied the treatment module 138 deactivates the electrochemical cell 118 by no longer supplying the electrochemical cell 118 with a current. In some embodiments, the treated wastewater may be disposed of, either by a drainage pipe or storage tank, may be reused by placing the treated wastewater in a storage tank that may be used for another wash process. In some embodiments, if the treated wastewater is to be used again there may be a plurality of sensors 128 located in the storage tank to determine if the treated wastewater is contamination free or past a predetermined threshold to empty the storage tank or use the water supply line 110 for the next wash process. The treatment module returns, at step 514, to the base module 132.

The functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

## Claims

1. A method for multistage electrode-based water treatment; comprising:
• testing the performance of the device, and
• providing a water supply, and
• applying a current to a first electrochemical cell, and
• providing a solution to the first electrochemical cell, and
• feeding an electroylated solution generated from the first electrochemical cell to a bleaching facility, and
• determining the completion of wash process, and
• draining the bleaching facility, and
• applying a current to a second electrochemical cell, and
• providing a solution to the second electrochemical cell, and
• treating the wastewater generated during the wash process.
